# EUROPEAN PATENT APPLICATION

(11) **EP 4 393 641 A1**
(43) Date of publication of application: **03.07.2024**
(21) Application number: 22882785.3
(22) Date of filing: 17.10.2022
(51) Int. Cl.: B24B 9/04

(54) **DEBURRING MECHANISM AND DEBURRING ASSEMBLY**

(30) Priority: 18.10.2021 CN 202122506154 U
(71) Applicant: BYD Company Limited, Shenzhen, Guangdong 518118 (CN)
(72) Inventor: HUANG, Yaoqin, Shenzhen, Guangdong 518118 (CN); NI, Xibo, Shenzhen, Guangdong 518118 (CN); WANG, Hongbin, Shenzhen, Guangdong 518118 (CN); XU, Jiaolian, Shenzhen, Guangdong 518118 (CN)
(74) Representative: Dehns Germany Partnerschaft mbB
(86) International application number: PCT/CN2022/125594
(87) International publication number: WO 2023/066179

(57) **Abstract**

A deburring mechanism and a deburring assembly. The deburring mechanism includes a frame, a first deburring module, and a second deburring module. The frame has a first side plate and a second side plate. The first side plate is arranged opposite to the second side plate in a first direction. The first deburring module is arranged on the first side plate. The second deburring module is arranged on the second side plate. The first deburring module and the second deburring module are arranged opposite to each other in a second direction and form a deburring passage. The deburring passage is used for placing an open end of a housing. The first deburring module includes a first cylindrical brush and first conical brushes arranged at two ends of the first cylindrical brush. The second deburring module includes a second cylindrical brush and second conical brushes arranged at two ends of the second cylindrical brush.

## Description

### CROSS-REFERENCE TO RELATED APPLICATIONS

This present disclosure claims priority to and benefits of Chinese Patent Application No. 202122506154.6, and entitled "HOUSING DEBURRING MECHANISM" filed on October 18, 2021. The entire content of the above-referenced application is incorporated herein by reference.

### FIELD

The present disclosure relates to the field of battery housing processing technologies, and more specifically, to a deburring mechanism and a deburring assembly.

### BACKGROUND

During processing the battery housing, sawing is needed to meet a height dimension of the battery housing to meet a battery capacity requirement. However, after sawing, burrs or corner raised edges remain on an open end of the battery housing. Excessive burrs or corner raised edges have a greater impact on a later welding quality of the housing and a cover. Effective and convenient removal on the burrs or corner raised edges of the open end is very important in a post-sawing process.

### SUMMARY

An objective of the present disclosure is to provide a new technical solution of a deburring mechanism and a deburring assembly.

According to a first aspect of an embodiment of the present disclosure, a deburring mechanism is provided. The deburring mechanism includes:
a frame, having a first side plate and a second side plate, and the first side plate being arranged opposite to the second side plate in a first direction; and
a first deburring module and a second deburring module, the first deburring module being arranged on the first side plate, and the second deburring module being arranged on the second side plate. The first deburring module and the second deburring module are arranged opposite to each other in a second direction and form a deburring passage. The deburring passage is used for placing an open end of a housing.

The first deburring module includes a first cylindrical brush and first conical brushes arranged at two ends of the first cylindrical brush.

The second deburring module includes a second cylindrical brush and second conical brushes arranged at two ends of the second cylindrical brush.

Optionally, the first deburring module includes a first motor. A first roller body is arranged on the first motor. The first cylindrical brush and the first conical brushes are both sleeved on the first roller body.

The second deburring module includes a second motor. A second roller body is arranged on the second motor. The second cylindrical brush and the second conical brushes are both sleeved on the second roller body.

Optionally, in a case that the first conical brushes are arranged at the two ends of the first cylindrical brush, a radial dimension of a cross-section of each first conical brush gradually increases in a direction away from the first cylindrical brush.

In a case that the second conical brushes are arranged at the two ends of the second cylindrical brush, a radial dimension of a cross-section of each second conical brush gradually increases in a direction away from the second cylindrical brush.

Optionally, the frame includes a third side plate connected to the first side plate and the second side plate. A support core is arranged on the third side plate.

In a case that the open end is placed in the deburring passage, the end of the support core away from the third side plate extends into the housing from the open end.

Optionally, a cleaning strip is arranged on an outer peripheral surface of the support core.

In a case that the support core extends into the housing, the cleaning strip abuts against the inner wall of the housing.

Optionally, an air inlet and an air outlet are provided on the support core. The air inlet is communicated with the air outlet.

In a case that the support core extends into the housing, the air outlet faces an inner surface of the housing.

Optionally, the support core is located between the first deburring module and the second deburring module.

Optionally, the deburring mechanism further includes at least one slide track assembly. The slide track assembly extends in a third direction. The frame includes a base. The base is slidably arranged on the slide track assembly.

Optionally, the deburring mechanism further includes a cylinder. The cylinder is fixed on the frame.

Optionally, an installation position of the first deburring module on the first side plate is adjustable.

Optionally, an installation position of the second deburring module on the second side plate is adjustable.

Optionally, the frame includes a base. A through hole is provided on the base. The through hole is connected to a tube. One end of the tube is arranged facing the second deburring module, and the other end of the tube is located outside the frame.

Optionally, the end of the first deburring module away from the first side plate is suspended. The end of the second deburring module away from the second side plate is suspended.

According to a second aspect of an embodiment of the present disclosure, a deburring assembly is provided. The deburring assembly includes two deburring mechanisms. The two deburring mechanisms are arranged along a length direction of a housing. The housing has two open ends.

The two deburring mechanisms include two deburring passages. The two open ends are respectively placed in the two deburring passages.

Optionally, the deburring assembly further includes supporting bases. In a case that the open ends are placed in the deburring passages, the supporting bases support the housing. A technical effect of the present disclosure is that in the embodiment of the present disclosure, the deburring mechanism includes a first deburring module and a second deburring module. The first deburring module is arranged opposite to the second deburring module in a second direction. The first deburring module includes a first cylindrical brush and first conical brushes arranged at two ends of the first cylindrical brush. The second deburring module includes a second cylindrical brush and second conical brushes arranged at two ends of the second cylindrical brush. Burrs around the open end of the housing are removed by cooperation of the first cylindrical brush, the first conical brushes, the second cylindrical brush, and the second conical brushes. In addition, cleanliness in removing the burrs from the open end of the housing is improved by the cooperation of the first cylindrical brush, the first conical brushes, the second cylindrical brush, and the second conical brushes.

Other features and advantages of the present disclosure become apparent from the following detailed descriptions of example embodiments of the present disclosure with reference to accompanying drawings.

### BRIEF DESCRIPTION OF THE DRAWINGS

Accompanying drawings constitute a part of this specification, show embodiments of the present disclosure, and are used together with this specification to describe a principle of the present disclosure.
FIG. 1 is a schematic diagram of a structure of a view angle of a deburring mechanism according to an embodiment of the present disclosure;
FIG. 2 is a schematic diagram of a structure of another view angle of a deburring mechanism according to an embodiment of the present disclosure;
FIG. 3 is an exploded view of a structure of a deburring mechanism according to an embodiment of the present disclosure;
FIG. 4 is a schematic diagram of a structure of a deburring mechanism according to an embodiment of the present disclosure;
FIG. 5 is a schematic diagram of a structure of a support core according to an embodiment of the present disclosure;
FIG. 6 is a schematic diagram of a structure of two deburring assemblies according to an embodiment of the present disclosure; and
FIG. 7 is an enlarged view of portion A circled in FIG. 4.

### Descriptions of reference numerals:

1: frame; 11: first side plate; 12: second side plate; 13: third side plate; 14: base; 141: through hole 142: tube;
21: first deburring module; 211: first cylindrical brush; 212: first conical brush; 2121: first sub-conical brush; 2122: second sub-conical brush; 213: first roller body; 2131: first limiting portion; 2132: first limiting member;
22: second deburring module; 221: second cylindrical brush; 222: second conical brush; 2221: third sub-conical brush; 2222: fourth sub-conical brush; 223: second roller body; 2231: second limiting portion; 2232: second limiting member;
31: first motor; 32: second motor;
4: support core; 41: cleaning strip; 42: air inlet; 43: air outlet; 401: first connection portion; 402: second connection portion; 403: support portion;
5: cylinder; 6: slide track assembly; 61: slide track; 62: slider; 7: supporting base;
8: housing; 81: open end;
810: first end edge; 811: second end edge; 812: third end edge; 813: fourth end edge;
814: first curved edge; 815: second curved edge; 816: third curved edge; 817: fourth curved edge.

### DETAILED DESCRIPTION

Various example embodiments of the present disclosure are now be described in detail with reference to the accompanying drawings. It should be noted that unless otherwise specified, opposite arrangement, numerical expressions, and numerical values of components and steps described in the embodiments do not limit the scope of the present disclosure.

The following descriptions of at least one example embodiment are merely illustrative, and in no way constitute any limitation on the present disclosure and application or use of the present disclosure.

Technologies and devices known to those of ordinary skill in related arts may not be discussed in detail, but where appropriate, the technologies and the devices should be considered as a part of the specification.

In all examples shown and discussed herein, any specific value should be construed as merely an example and not as limitations. Therefore, another example of the example embodiments may have different values.

It should be noted that similar numbers and letters indicate similar items in the following accompanying drawings, so that once an item is defined in an accompanying drawing, the item does not need to be discussed further in subsequent accompanying drawings.

When deburring processing is performed on an open end of a battery housing, a deburring device in the related art can only polish off part of burrs on the open end, but cannot completely remove the burrs on the open end, especially burrs of raised edges on a chamfer of the open end. The burrs of raised edges on the chamfer of the open end still need to be manually dealt with.

Based on the foregoing technical problem, according to a first aspect of an embodiment of the present disclosure, a deburring mechanism is provided. The deburring mechanism provided in the embodiment of the present disclosure can remove burrs around an open end 81 of a battery housing. The battery housing may be a cubic housing or a cylindrical housing.

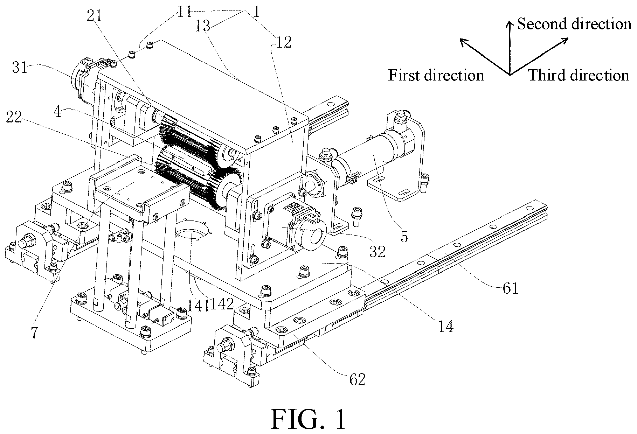

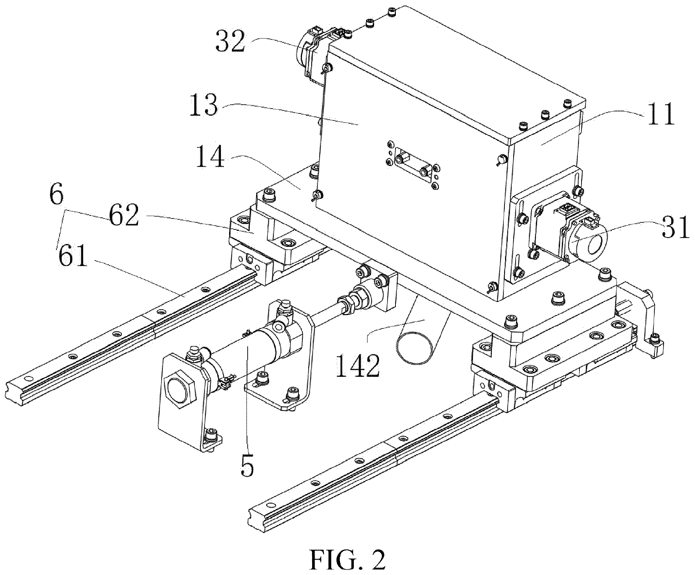

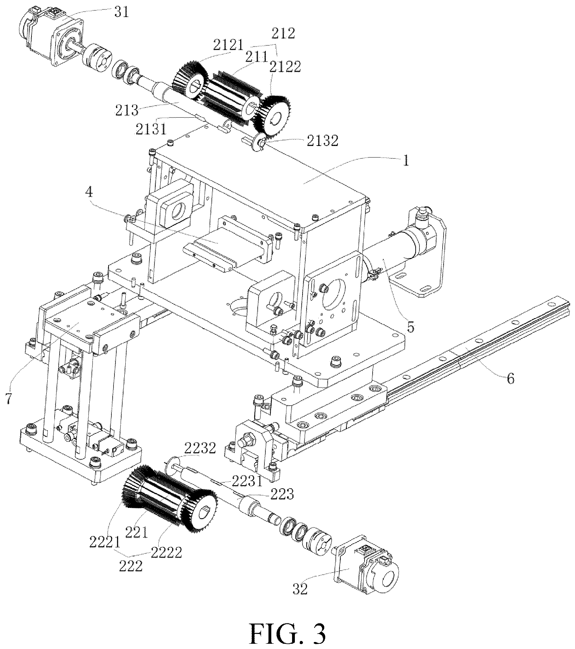

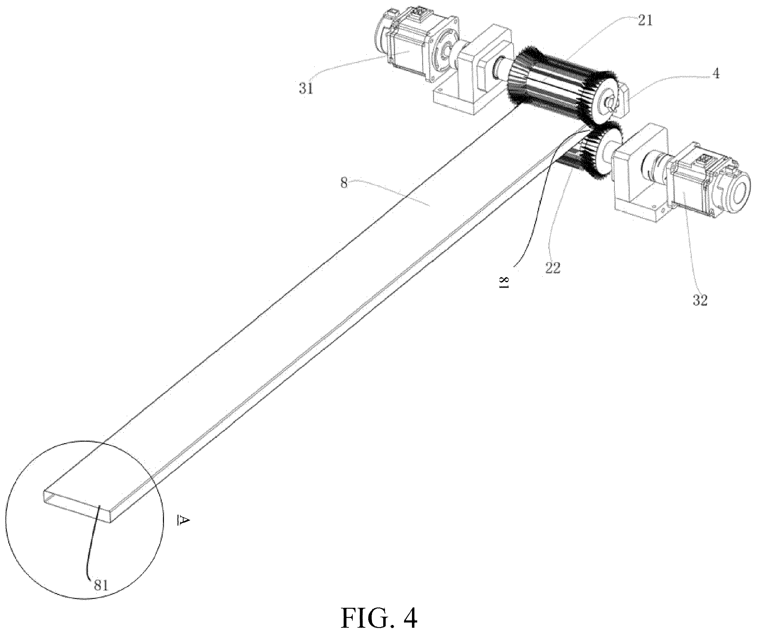

Refer to FIG. 1 to FIG. 6. The deburring mechanism includes a frame 1, a first deburring module 21, and a second deburring module 22.

The frame 1 has a first side plate 11 and a second side plate 12. The first side plate 11 is arranged opposite to the second side plate 12 in a first direction.

The first deburring module 21 is arranged on the first side plate 11, and the second deburring module 22 is arranged on the second side plate 12. The first deburring module 21 and the second deburring module 22 are arranged opposite to each other in a second direction and form a deburring passage. The deburring passage is used for placing the open end 81 of a housing 8. The first direction is perpendicular to the second direction. In an embodiment, when the housing 8 is deburred, the open end 81 faces the deburring passage.

The first deburring module 21 includes a first cylindrical brush 211 and first conical brushes 212 arranged at two ends of the first cylindrical brush 211.

The second deburring module 22 includes a second cylindrical brush 221 and second conical brushes 222 arranged at two ends of the second cylindrical brush 221.

In other words, the deburring mechanism mainly includes the frame 1, the first deburring module 21, and the second deburring module 22. The frame 1 achieves a supporting and accommodating effect on the first deburring module 21 and the second deburring module 22. Burrs around the open end 81 of the housing 8 are removed by cooperation of the first deburring module 21 and the second deburring module 22.

In an embodiment, the end of the first deburring module 21 away from the first side plate 11 is suspended. The end of the second deburring module 22 away from the second side plate 12 is suspended. In this way, a structure can be simplified.

The frame 1 has the first side plate 11 and the second side plate 12. The first side plate 11 is arranged opposite to the second side plate 12 in the first direction. In other words, space is formed between the first side plate 11 and the second side plate 12. The first direction is a width direction of the frame 1.

The first deburring module 21 is arranged on the first side plate 11. In an optional embodiment, the first deburring module 21 is detachably arranged on the first side plate 11.

The second deburring module 22 is arranged on the second side plate 12. In an optional embodiment, the second deburring module 22 is detachably arranged on the second side plate 12.

In a case that the first deburring module 21 is fixed on the first side plate 11 and the second deburring module 22 is fixed on the second side plate 12, the first deburring module 21 and the second deburring module 22 are located on the space formed between the first side plate 11 and the second side plate 12.

In a case that the first deburring module 21 is fixed on the first side plate 11 and the second deburring module 22 is fixed on the second side plate 12, the first deburring module 21 and the second deburring module 22 are arranged opposite to each other in the second direction and form the deburring passage. The second direction is a height direction of the frame 1.

Specifically, the first deburring module 21 is located above the second deburring module 22 in the second direction. The deburring passage is formed between the first deburring module 21 and the second deburring module 22.

The deburring passage is used for placing the open end 81 of the housing 8. When the open end 81 of the housing 8 is deburred, the open end 81 of the housing 8 faces the deburring passage. In other words, the deburring passage is defined with a width dimension in the second direction. The width dimension of the deburring passage is consistent with a thickness dimension of the housing 8 (that is, a width dimension of the open end 81). The deburring passage is defined with a length dimension in the first direction. The length dimension of the deburring passage is consistent with a width dimension of the housing 8 (that is, a length dimension of the open end 81).

For example, the to-be-processed housing 8 is carried near the deburring mechanism, and the open end 81 of the housing 8 faces the deburring passage. In addition, the open end 81 of the housing 8 extends into the deburring passage. Burrs around the open end 81 are removed by cooperation of the first deburring module 21 and the second deburring module 22.

In the embodiment of the present disclosure, the first deburring module 21 includes the first cylindrical brush 211 and the first conical brushes 212 arranged at the two ends of the first cylindrical brush 211.

Specifically, the first conical brushes 212 include a first sub-conical brush 2121 and a second sub-conical brush 2122. The first cylindrical brush 211 includes a first end and a second end that are opposite to each other. The first sub-conical brush 2121 is arranged on a first end side, and the second sub-conical brush 2122 is arranged on a second end side.

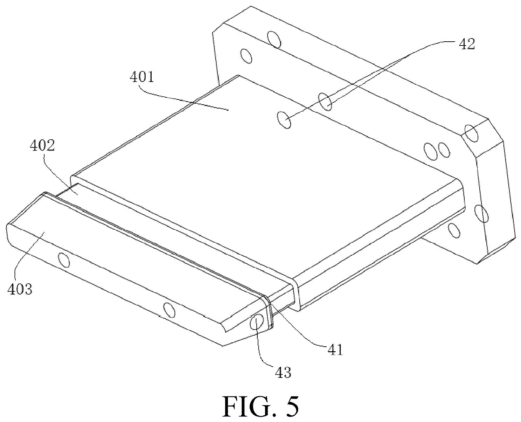

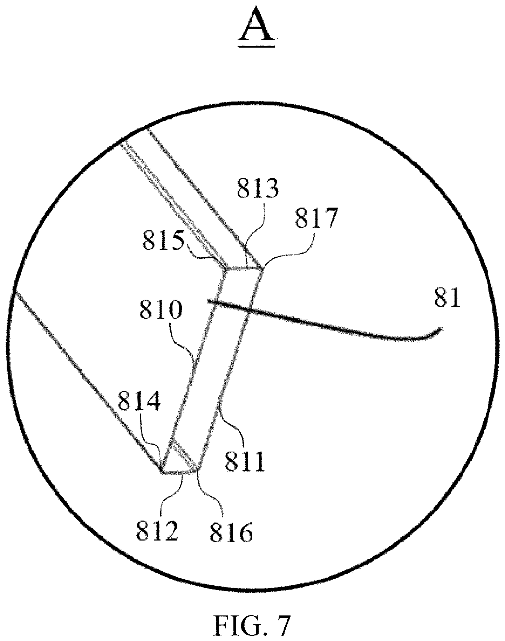

With reference to FIG. 5 and FIG. 7, for example, using a cubic housing as an example, an open end 81 of the cubic housing includes a first end edge 810 and a second end edge 811 along the first direction. The first end edge 810 and the second end edge 811 are spaced apart in the second direction. The open end 81 of the cubic housing includes a third end edge 812 and a fourth end edge 813 along the second direction. The third end edge 812 and the fourth end edge 813 are spaced apart in the first direction. In addition, the open end 81 of the cubic housing includes a first curved edge 814 connecting the first end edge 810 and the third end edge 812, a second curved edge 815 connecting the first end edge 810 and the fourth end edge 813, a third curved edge 816 connecting the second end edge 811 and the third end edge 812, and a fourth curved edge 817 connecting the second end edge 811 and the fourth end edge 813.

In a case that the open end 81 of the housing 8 extends into a deburring passage, a first deburring module 21 is located above the open end 81 of the housing 8 in the second direction. The first curved edge 814 of the open end 81 abuts against a first sub-conical brush 2121, and the second curved edge 815 of the open end 81 abuts against a second sub-conical brush 2122.

A first cylindrical brush 211 is configured to remove burrs on the first end edge 810 of the open end 81.

The first conical brushes 212 include a first sub-conical brush 2121 and a second sub-conical brush 2122. The first sub-conical brush 2121 is configured to remove burrs on the first curved edge 814 and the third end edge 812.

The second sub-conical brush 2122 is configured to remove burrs on the second curved edge 815 and the fourth end edge 813.

For example, the first conical brushes 212 may be fixed at two ends of the first cylindrical brush 211, the first conical brushes 212 are detachably connected to the first cylindrical brush 211, or the first conical brushes 212 and the first cylindrical brush 211 are only in surface contact and do not constitute a connection.

In the embodiment of the present disclosure, a second deburring module 22 includes a second cylindrical brush 221 and second conical brushes 222 arranged at two ends of the second cylindrical brush 221.

Specifically, the second conical brushes 222 include a third sub-conical brush 2221 and a fourth sub-conical brush 2222. The second cylindrical brush 221 includes a first end and a second end that are opposite to each other. The third sub-conical brush 2221 is arranged on a first end side, and the fourth sub-conical brush 2222 is arranged on a second end side.

In a case that the open end 81 of the housing 8 extends into the deburring passage, the second deburring module 22 is located below the open end 81 of the housing 8 in the second direction. The third curved edge 816 of the open end 81 abuts against the third sub-conical brush 2221, and the fourth curved edge 817 of the open end 81 abuts against the fourth sub-conical brush 2222.

The second cylindrical brush 221 is configured to remove burrs on the second end edge 811 of the open end 81.

The second conical brushes 222 include a third sub-conical brush 2221 and a fourth sub-conical brush 2222. The third sub-conical brush 2221 is configured to remove burrs on the third curved edge 816 and the third end edge 812.

The fourth sub-conical brush 2222 is configured to remove burrs on the fourth curved edge 817 and the fourth end edge 813.

For example, the second conical brushes 222 may be fixed at the two ends of the second cylindrical brush 221, the second conical brushes 222 are detachably connected to the second cylindrical brush 221, or the second conical brushes 222 and the second cylindrical brush 221 are only in surface contact and do not constitute a connection.

In the embodiment of the present disclosure, a deburring mechanism includes the first deburring module 21 and the second deburring module 22. The first deburring module 21 is arranged opposite to the second deburring module 22 in the second direction. The first deburring module 21 includes the first cylindrical brush 211 and the first conical brushes 212 arranged at the two ends of the first cylindrical brush 211. The second deburring module 22 includes the second cylindrical brush 221 and the second conical brushes 222 arranged at the two ends of the second cylindrical brush 221. Burrs around the open end 81 of the housing 8 are removed by cooperation of the first cylindrical brush 211, the first conical brushes 212, the second cylindrical brush 221, and the second conical brushes 222. In addition, cleanliness in removing the burrs from the open end 81 of the housing 8 is improved by the cooperation of the first cylindrical brush 211, the first conical brushes 212, the second cylindrical brush 221, and the second conical brushes 222.

In an embodiment, an installation position of the first deburring module 21 on the first side plate 11 is adjustable.

In an embodiment, an installation position of the second deburring module 22 on the second side plate 12 is adjustable.

In an embodiment, a first obround hole is formed on the first side plate 11, and the first obround hole extends in the second direction. A second obround hole is formed on the second side plate 12, and the second obround hole extends in the second direction.

The first deburring module 21 is arranged on the first side plate 11 through the first obround hole, and the second deburring module 22 is arranged on the second side plate 12 through the second obround hole.

Specifically, the first deburring module 21 is arranged on the first side plate 11 through the first obround hole. Because the first obround hole extends in the second direction, an installation position of the first deburring module 21 on the first obround hole may be adjusted to change an installation position of the first deburring module 21 on the first side plate 11 alone the second direction.

The second deburring module 22 is arranged on the second side plate 12 through the second obround hole. Because the second obround hole extends in the second direction, an installation position of the second deburring module 22 on the second obround hole may be adjusted to change an installation position of the second deburring module 22 on the second side plate 12 alone the second direction.

In the embodiment, the installation position of the first deburring module 21 on the first side plate 11 along the second direction and the installation position of the second deburring module 22 on the second side plate 12 along the second direction may be changed to further change a gap dimension between the first deburring module 21 and the second deburring module 22 in the second direction. In other words, a width dimension of the deburring passage in the second direction may be changed.

It should be noted that a method of adjusting the gap dimension between the first deburring module 21 and the second deburring module 22 in the second direction is not limited in the embodiment, provided that the gap dimension between the first deburring module 21 and the second deburring module 22 can be adjusted in the second direction.

For example, the gap dimension of the first deburring module 21 and the second deburring module 22 in the second direction may alternatively be adjusted by cylinder driving. During adjusting the gap dimension between the first deburring module 21 and the second deburring module 22 in the second direction by cylinder driving, as the first deburring module 21 and the second deburring module 22 are closer to the open end 81 of the housing 8, a distance between the first and second deburring modules and the open end 81 is shortened more slowly, to prevent the first deburring module 21 and the second deburring module 22 from directly impacting the open end 81 of the housing 8.

In an embodiment, refer to FIG. 1 to FIG. 3. The first deburring module 21 includes a first roller body 213. The first cylindrical brush 211 and the first conical brushes 212 are both sleeved on the first roller body 213.

The deburring mechanism further includes a first motor 31. The first roller body 213 is connected to the first motor 31.

The second deburring module 22 includes a second roller body 223. The second cylindrical brush 221 and the second conical brushes 222 are both sleeved on the second roller body 223. The deburring mechanism further includes a second motor 32. The second roller body 223 is connected to the second motor 32.

Specifically, a first limiting portion 2131 is arranged on the first roller body 213. First positioning holes are respectively provided on the first cylindrical brush 211 and the first conical brushes 212. The first cylindrical brush 211 and the first conical brushes 212 are both sleeved and fixed on the first roller body 213 by cooperation of the first limiting portion 2131 and the first positioning holes. For example, the first limiting portion 2131 is a key, and the first positioning holes are keyways.

An end of the first roller body 213 is connected to a rotating shaft of the first motor 31 through a first connection portion. In a case that the first motor 31 rotates, the first motor 31 drives the first roller body 213 to rotate, and the first roller body 213 makes the first cylindrical brush 211 and the first conical brushes 212 to rotate, so as to improve cleanliness in removing burrs from the open end 81. For example, the first connection portion may be a bearing.

A first limiting member 2132 is arranged at the end of the first roller body 213 away from the first motor 31. The first limiting member 2132 prevents the second sub-conical brush 2122 from falling off from the first roller body 213.

A second limiting portion 2231 is arranged on the second roller body 223. Second positioning holes are respectively arranged in the second cylindrical brush 221 and the second conical brushes 222. The second cylindrical brush 221 and the second conical brushes 222 are both sleeved and fixed on the second roller body 223 by cooperation of the second limiting portion 2231 and the second positioning holes. For example, the second limiting portion 2231 is a key, and the second positioning holes are keyways.

An end of the second roller body 223 is connected to a rotating shaft of the second motor 32 through a second connection portion. In a case that the second motor 32 rotates, the second motor 32 drives the second roller body 223 to rotate, and the second roller body 223 makes the second cylindrical brush 221 and the second conical brushes 222 to rotate, so as to improve cleanliness in removing burrs from the open end 81. For example, the second connection portion is a bearing.

A second limiting member 2232 is arranged at the end of the second roller body 223 away from the second motor 32. The second limiting member 2232 prevents the third sub-conical brush 2221 from falling off from the second roller body 223.

In an embodiment, in a case that the first motor 31 is arranged on the first side plate 11, positioning plates are arranged on both the inner surface and the outer surface of the first side plate 11, to improve stability of installing the first motor 31.

In a case that the second motor 32 is arranged on the second side plate 12, positioning plates are arranged on both the inner surface and the outer surface of the second side plate 12, to improve stability of installing the second motor 32.

In an embodiment, refer to FIG. 1 to FIG. 4. In a case that the first conical brushes 212 are arranged at the two ends of the first cylindrical brush 211, a radial dimension of a cross-section of each first conical brush 212 gradually increases in a direction away from the first cylindrical brush 211.

In a case that the second conical brushes 222 are arranged at the two ends of the second cylindrical brush 221, a radial dimension of a cross-section of each second conical brush 222 gradually increases in a direction away from the second cylindrical brush 221.

Specifically, each first conical brush 212 is of a truncated cone-shaped structure. Each first conical brush 212 includes an upper surface and a lower surface, and the upper surface is arranged parallel to the lower surface. A radial dimension of the upper surface is smaller than a radial dimension of the lower surface.

In a case that the first conical brushes 212 are arranged at the two ends of the first cylindrical brush 211, the upper surface of each first conical brush 212 is arranged close to an end surface of the first cylindrical brush 211, and the lower surface of each first conical brush 212 is arranged away from the end surface of the first cylindrical brush 211. Shapes of the first conical brushes 212 are limited in the embodiment, so that it is convenient that the first conical brushes 212 abut against the curved edge of the open end 81, and it is convenient that the first conical brushes 212 remove burrs on the curved edge of the open end 81 and the end edge extending in the second direction.

Each second conical brush 222 is of a truncated cone-shaped structure. Each second conical brush 222 includes an upper surface and a lower surface, and the upper surface is arranged parallel to the lower surface. A radial dimension of the upper surface is smaller than a radial dimension of the lower surface.

In a case that the second conical brushes 222 are arranged at the two ends of the second cylindrical brush 221, the upper surface of each second conical brush 222 is arranged close to an end surface of the second cylindrical brush 221, and the lower surface of each second conical brush 222 is arranged away from the end surface of the second cylindrical brush 221. Shapes of the second conical brushes 222 are limited in the embodiment, so that it is convenient that the second conical brushes 222 abut against the curved edge of the open end 81, and it is convenient that the second conical brushes 222 remove burrs on the curved edge of the open end 81 and the end edge extending in the second direction.

In an embodiment, refer to FIG. 1 to FIG. 3. The frame 1 includes a third side plate 13 connecting the first side plate 11 and the second side plate 12. A support core 4 is arranged on the third side plate 13.

In a case that the open end 81 is placed in the deburring passage, the end of the support core 4 away from the third side plate 13 extends into the housing 8 from the open end 81.

Specifically, the frame 1 includes the third side plate 13 connecting the first side plate 11 and the second side plate 12. The frame 1 has an open side. To be specific, there is no side plate opposite to the third side plate 13 in the second direction. The first side plate 11, the second side plate 12, and the third side plate 13 form a chamber. The open end 81 of the housing 8 extends into the chamber from the open side to remove the burrs of the open end 81.

In the embodiment, a support core 4 is arranged on the third side plate 13. The support core 4 achieves a supporting effect on the open end 81 of the housing 8. Specifically, in a case that the open end 81 is placed in the deburring passage, the end of the support core 4 away from the third side plate 13 extends into the housing 8 from the open end 81 to support the open end 81 of the housing 8. The support core 4 extends into the housing 8 to prevent the open end 81 of the housing 8 from being deformed under a joint action of the first deburring module 21 and the second deburring module 22.

In an embodiment, the support core 4 is located between the first deburring module 21 and the second deburring module 22.

In an embodiment, refer to FIG. 5. A cleaning strip 41 is arranged on an outer peripheral surface of the support core 4.

In a case that the support core 4 extends into the housing 8, the cleaning strip 41 abuts against an inner wall of the housing 8.

Specifically, the support core 4 includes a first connection portion 401, a support portion 403, and a second connection portion 402 connecting the first connection portion 401 and the support portion 403. The cleaning strip 41 is arranged on the support core 403. Alternatively, cleaning strips 41 are each arranged on the first connection portion 401, the support portion 403, and the second connection portion 402. In a case that an end of the support core 4 extends into the housing 8 from the open end 81, the support portion of the support core 4 extends into the housing 8. The first connection portion 401 is fixed on the third side plate 13.

The cleaning strip 41 is arranged on a peripheral surface of the support portion 403. In a case that the support portion 403 of the support core 4 extends into the housing 8, a part of the cleaning strip 41 extends into the housing 8, and the cleaning strip 41 abuts against the inner wall of the housing 8. After the support portion 403 is pulled out from the housing 8, the cleaning strip 41 clean up chips in the housing 8. In addition, a part of the cleaning strip 41 is arranged around the open end 81 of the housing 8. The cleaning strip 41 performs preliminary cleaning on the burrs of the open end 81 and cleans up some of the chips.

In an embodiment, refer to FIG. 5. An air inlet 42 and an air outlet 43 are provided on the support core 4. The air inlet 42 is communicated with the air outlet 43.

In a case that the support core 4 extends into the housing 8, the air outlet 43 faces an inner surface of the housing 8.

Specifically, the air inlet 42 and the air outlet 43 are provided on the support core 4. The air inlet 42 is communicated with the air outlet 43 to form an airflow channel. The air inlet 42 may be communicated to the air outlet 43 inside the support core 4, so that air flow may circulate inside the support core 4 (not shown in the figure). External compressed air enters the housing 8 through the air inlet 42 to blow the chips in the housing 8 to the inner surface of the housing 8, and to clean the chips attached to the inner surface of the housing 8 by using the cleaning strip 41 arranged on the support core 4.

In the embodiment, the air outlet 43 is provided on the support core 4. The air outlet 43 is arranged at a position facing the inner surface of the housing 8, to avoid that blowing the chips directly inside the housing 8 is not conducive to the cleaning strip 41 cleaning the chips inside the housing 8.

In an optional embodiment, the deburring mechanism further includes a conveyance channel. An end of the conveyance channel is located above the second deburring module 22 and is arranged directly opposite to the second deburring module 22, so that the chips falling from the deburring passage exactly fall into the conveyance channel to be discharged outside the frame 1.

For example, the frame 1 includes a base 14. A through hole 141 is provided on the base 14. The through hole 141 is connected to a tube 142. An end of the tube 142 is arranged facing the second deburring module 22, and the other end of the tube 142 is located outside the frame 1.

In an embodiment, refer to FIG. 1 to FIG. 3. The deburring mechanism further includes at least one slide track assembly 6. The slide track assembly 6 extends in a third direction. The frame 1 is slidably arranged on the slide track assembly 6.

Specifically, the first direction, the second direction, and the third direction are perpendicular to each other. The third direction is a length direction of the frame 1.

Specifically, the deburring mechanism further includes the slide track assembly 6. The frame 1 is arranged on the slide track assembly 6, and the frame 1 can slide alone the slide track assembly 6. For example, the deburring mechanism is moved to a working position via the slide track assembly 6 on the frame 1, and the deburring mechanism removes the burrs on the open end 81 of the housing 8.

Specifically, the frame 1 includes the base 14. The first side plate 11, the second side plate 12, and the third side plate 13 are all fixed on the base 14. The slide track assembly 6 includes a slider 62 and a slide track 61. The slider 62 is slidably arranged on the slide track 61. The base 14 is fixed on the slider 62 via a fastener. The frame 1 is slidably arranged on the slide track assembly 6 by cooperation of the slider 62 and the slide track 61. Refer to FIG. 1 to FIG. 3. The deburring mechanism includes two slide track assemblies 6.

In an embodiment, refer to FIG. 1 to FIG. 3. The deburring mechanism further includes a cylinder 5. The cylinder 5 is fixed on the frame 1.

In the embodiment, the cylinder 5 is fixed on the frame 1. The cylinder 5 pushes the deburring mechanism to the working position to polish the burrs on the open end 81 of the housing 8.

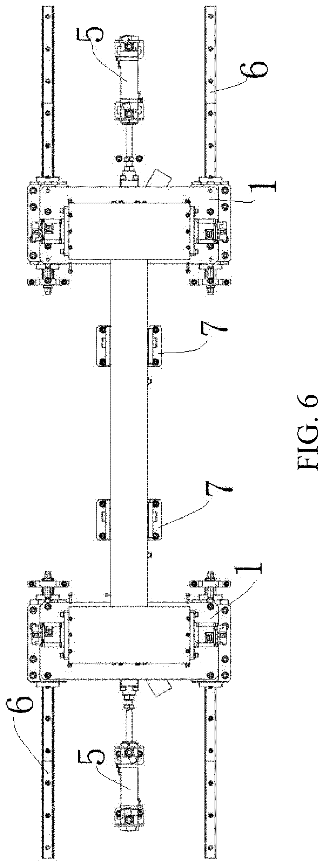

In an embodiment, refer to FIG. 6. A deburring assembly is provided. The deburring assembly includes two deburring mechanisms. The two deburring mechanisms are arranged along a length direction of a housing 8. The housing 8 has two open ends 81.

The two deburring mechanisms include two deburring passages. The two open ends 81 are respectively placed in the two deburring passages.

Specifically, during polishing the open ends 81 of the housing 8 to remove burrs, because the housing 8 includes two open ends 81 opposite to each other, the burrs on the open ends 81 of the housing 8 are removed by the two deburring mechanisms simultaneously, to improve work efficiency.

Specifically, in actual use, the deburring mechanisms form two workstations on the left and right to polish the two open ends 81 of the housing 8. For example, the deburring mechanisms at two ends are pushed to the working position by the cylinder 5. A motor drives a first deburring module 21 and a second deburring module 22 to polish the housing 8.

In an embodiment, refer to FIG. 1 to FIG. 3 and FIG. 6. The deburring assembly further includes supporting bases 7. In a case that the open ends 81 are placed in the deburring passages, the supporting bases 7 support the housing 8.

Specifically, in a case that the open ends 81 of the housing 8 are placed in the deburring passages, the housing 8 is located above the supporting bases 7, and the supporting bases 7 support and position the housing 8.

For example, in actual use, the deburring assembly is divided into two workstations on the left and right. The housing 8 is supported and positioned by two supporting bases 7.

In the present disclosure, unless otherwise explicitly specified or defined, the terms such as "install", "connect", "connection", and "fix" should be understood in a broad sense. For example, the connection may be a fixed connection, a detachable connection, or an integral connection; the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in the present disclosure according to specific situations.

In the present disclosure, unless otherwise explicitly specified or defined, a first feature being located "above" or "below" a second feature may be the first feature being in a direct contact with the second feature, or the first feature being in an indirect contact with the second feature through an intermediary. In addition, that the first feature is "above", "over", or "on" the second feature may indicate that the first feature is right above or diagonally above the second feature, or may merely indicate that the horizontal position of the first feature is higher than that of the second feature. That the first feature is "below", "under", and "beneath" the second feature may indicate that the first feature is right below or diagonally below the second feature, or may merely indicate that the horizontal position of the first feature is lower than that of the second feature.

The foregoing embodiments focus on differences between various embodiments. Different optimization features between various embodiments can be combined to form a better embodiment without contradictions. Considering brevity of the text, details are not described herein.

Although some specific embodiments of the present disclosure have been described in detail by way of examples, a person skilled in the art should understand that the foregoing examples are only for description and are not intended to limit the scope of the present disclosure. A person skilled in the art should understand that modifications may be made to the foregoing embodiments without departing from the scope and spirit of the present disclosure. The scope of the present disclosure is defined by the appended claims.

## Claims

1. A deburring mechanism, comprising:
a frame (1), having a first side plate (11) and a second side plate (12), the first side plate (11) being arranged opposite to the second side plate (12) in a first direction; and
a first deburring module (21) and a second deburring module (22), the first deburring module (21) being arranged on the first side plate (11), the second deburring module (22) being arranged on the second side plate (12), the first deburring module (21) and the second deburring module (22) being arranged opposite to each other in a second direction and forming a deburring passage, the deburring passage being used for placing an open end (81) of a housing (8), and the first direction being perpendicular to the second direction;
the first deburring module (21) comprising a first cylindrical brush (211) and first conical brushes (212) arranged at two ends of the first cylindrical brush (211); and
the second deburring module (22) comprising a second cylindrical brush (221) and second conical brushes (222) arranged at two ends of the second cylindrical brush (221).

2. The deburring mechanism according to claim 1, further comprising a first motor (31) and a second motor (32),
the first deburring module (21) comprising a first roller body (213), the first cylindrical brush (211) and the first conical brushes (212) being both sleeved on the first roller body (213), and the first roller body (213) being connected to the first motor (31); and
the second deburring module (22) comprising a second roller body (223), the second cylindrical brush (221) and the second conical brushes (222) being both sleeved on the second roller body (223), and the second roller body (223) being connected to the second motor (32).

3. The deburring mechanism according to claim 1 or 2, wherein in a case that the first conical brushes (212) are arranged at the two ends of the first cylindrical brush (211), a radial dimension of a cross-section of each first conical brush (212) gradually increases in a direction away from the first cylindrical brush (211); and
in a case that the second conical brushes (222) are arranged at the two ends of the second cylindrical brush (221), a radial dimension of a cross-section of each second conical brush (222) gradually increases in a direction away from the second cylindrical brush (221).

4. The deburring mechanism according to any one of claims 1 to 3, wherein the frame (1) comprises a third side plate (13) connected to the first side plate (11) and the second side plate (12), and a support core (4) is arranged on the third side plate (13); and
in a case that the open end (81) is placed in the deburring passage, the end of the support core (4) away from the third side plate (13) extends into the housing (8) from the open end (81).

5. The deburring mechanism according to claim 4, wherein a cleaning strip (41) is arranged on an outer peripheral surface of the support core (4); and
in a case that the support core (4) extends into the housing (8), the cleaning strip (41) abuts against an inner wall of the housing (8).

6. The deburring mechanism according to claim 4 or 5, wherein an air inlet (42) and an air outlet (43) are provided on the support core (4), and the air inlet (42) is communicated with the air outlet (43); and
in a case that the support core (4) extends into the housing (8), the air outlet (43) faces an inner surface of the housing (8).

7. The deburring mechanism according to any one of claims 4 to 6, wherein the support core (4) is located between the first deburring module (21) and the second deburring module (22).

8. The deburring mechanism according to any one of claims 1 to 7, further comprising at least one slide track assembly (6), the slide track assembly (6) extending in a third direction, the first direction, the second direction, and the third direction being perpendicular to each other; and
the frame (1) being slidably arranged on the slide track assembly (6).

9. The deburring mechanism according to any one of claims 1 to 8, further comprising a cylinder (5), the cylinder (5) being fixed on the frame (1).

10. The deburring mechanism according to any one of claims 1 to 9, wherein an installation position of the first deburring module (21) on the first side plate (11) is adjustable.

11. The deburring mechanism according to any one of claims 1 to 10, wherein an installation position of the second deburring module (22) on the second side plate (12) is adjustable.

12. The deburring mechanism according to any one of claims 1 to 11, wherein the frame (1) comprises a base (14), a through hole (141) is provided on the base (14), the through hole (141) is connected to a tube (142), and one end of the tube (142) is arranged facing the second deburring module (22) and the other end of the tube (142) is located outside the frame (1).

13. The deburring mechanism according to any one of claims 1 to 12, wherein the end of the first deburring module (21) away from the first side plate (11) is suspended, and the end of the second deburring module (22) away from the second side plate (12) is suspended.

14. A deburring assembly, comprising two deburring mechanisms according to any one of claims 1 to 13, the two deburring mechanisms being arranged along a length direction of the housing (8), the housing (8) having two open ends (81); and
the two deburring mechanisms comprising two deburring passages, and the two open ends (81) being respectively placed in the two deburring passages.

15. The deburring assembly according to claim 14, further comprising supporting bases (7), in a case that the open ends (81) being placed in the deburring passages, the supporting bases (7) supporting the housing (8).
